# EUROPÄISCHE PATENTSCHRIFT

(11) **EP 1 413 412 B1**
(45) Veröffentlichungstag und Bekanntmachung des Hinweises auf die Patenterteilung: **21.03.2007**
(21) Anmeldenummer: 02023466.2
(22) Anmeldetag: 21.10.2002
(51) Int. Cl.: B29B 7/42, B29C 47/64

(54) **Mischvorrichtung**
Mixing apparatus
Appareil de mélange

(43) Veröffentlichungstag der Anmeldung: 28.04.2004
(73) Patentinhaber: BASF Aktiengesellschaft, 67056 Ludwigshafen (DE)
(72) Erfinder: Hartmut, Nikolai, 67149 Meckenheim (DE); Grittmann, Ernst-Jürgen, 67069 Ludwigshafen (DE)

(56) Entgegenhaltungen:
- DE-A- 2 722 933
- US-A- 4 447 156

## Beschreibung

Die vorliegende Erfindung betrifft eine Mischvorrichtung, die eine Welle (1), einen mit dieser Welle form- und kraftschlüssig verbundenen Vorring (2), einen, in einem Abstand A von dem Vorring, form- und kraftschlüssig mit der Welle verbundenen Endring (3) und einen losen, frei drehbaren und zwischen dem Vorring und dem Endring hin- und herbewegbaren Mischring (4), umfasst.

Aus dem Stand der Technik waren Vorrichtungen zum Mischen von Kunststoffschmelzen bekannt.

So war aus der DE-A 100 00 938 eine Mischvorrichtung bekannt, bei der auf einen Rotor ein Paket von abwechselnd hintereinander angefügten Mischringen und Teilringen aufgezogen sind. Die Mischringe weisen Nuten, die Teilungsringe Bohrungen auf. Tritt Schmelze von den Mischnuten zu den Bohrungen über, wird sie ausgelenkt und geteilt und auf diese Weise gemischt. Ein ähnliches Prinzip wird in der EP-A1 1 000 656 offenbart, mit dem Unterschied, dass ein Teil der Ringe des Ringpaketes frei drehbar sind (siehe Oberbegriff des vorliegenden Anspruchs 1). Beide vorrichtungen haben den Nachteil, dass sie zum einen konstruktiv aufwendig, verschleißanfällig und schwer zu reinigen sind und zum anderen hohe Drucke erforderlich sind, um die Schmelze durch die Bohrungen zu pressen.

Die EP-A 48590 offenbart einen Extrusionsmischer aus einem Rotor und einem Stator, wobei sowohl der Rotor als auch der Stator Reihen halbkreisförmiger Aussparungen aufweisen. Die Aussparungen von Rotor und Stator liegen nicht übereinander sondern sind etwas gegeneinander versetzt. Das Extrusionsgut wird dadurch nicht nur geschert sondern auch zerteilt und gedreht. Auch diese Vorrichtung ist konstruktiv aufwendig und hat des weiteren den Nachteil dass die Mischwirkung erst bei relativ langen Statoren für praktische Anforderungen hinreichend ist. Darüber hinaus muss beim Einsatz dieser Statoren in einer Spritzgießmaschine eine Rückstromsperre zusätzlich eingebaut werden, da die Mischvorrichtung selbst dafür nicht geeignet ist, den Rückfluss der Schmelze zu verhindern.

Gegenstand der EP-B1 219 334 ist ein Hohlraumtransfermischextruder, der einen Stator und einen Rotor umfasst und sich dadurch auszeichnet, dass sowohl der Stator als auch der Rotor zwei Gruppen von Hohlräumen aufweist. Diese Hohlraumgruppen sind in Form eine Parallelogramms zueinander ausgerichtet, wenn sie auf eine Ebene projiziert werden und sind des Weiteren durch ihre Neigungswinkel charakterisiert. Diese Mischvorrichtung ist nachteilig, weil diese Vorrichtung ebenso wie die in der EP-A 48590 genannte teuer in ihrer Herstellung ist und ihre Mischwirkung abhängt von der Länge des Stators.

Aus der JP 50-90117 geht eine Mischvorrichtung für Spritzgießmaschinen hervor, die in der Art einer Rückstromsperre funktioniert. Die Mischvorrichtung besteht dabei aus zwei Ringen, wobei der eine auf die Schneckenwelle aufgeschraubt ist und der andere darüber beweglich angeordnet ist. Beide Teile weisen Kanäle auf, die so angeordnet sind, dass sie überlappen und die Schmelze von einem direkt in den anderen Kanal übergeben wird. Die Mischwirkung dieser Vorrichtung ist für viele Anwendungen nicht hinreichend.

In dem Patent EP-B1 340 873 wird eine Mischvorrichtung für einen Extruder oder eine Spritzformmaschine beschrieben. Diese weist einen gesonderten für eine freilaufende Drehung um einen Rotor angeordneten Mischring auf. Der Rotor ist in einem Stator angeordnet. Der Mischring zeichnet sich dadurch aus, dass er Mischdurchgänge aufweist, die sich von der Innenfläche des Stators bis zur Außenfläche des Rotors erstrecken. Mit anderen Worten hat der Mischring Löcher. Die Mischvorrichtung gemäß EP-B1 340 873 kann für Spritzformmaschinen die Funktion einer Rückströmsperre übernehmen. Die in dem Patent offenbarte Mischvorrichtung hat den Nachteil, dass der Schmelzetransport nicht für alle Anforderungen hinreichend gut gewährleistet ist. Zum anderen dichtet die Mischvorrichtung nicht hinreichend gut ab, wenn sie als Rückstromsperre eingesetzt wird. Darüber hinaus ist die Mischwirkung nur dann optimal, wenn die Mischvorrichtung eine gewisse Mindestlänge hat. Die Mindestlänge beträgt ca. dem zweifachen Schneckendurchmesser 2D. Daher kann diese Mischvorrichtung nicht jedem Extruder oder jeder Spritzformmaschine eingepasst werden, sondern es müssen die Maschinen speziell hierfür umgebaut, sprich die Schnecke muss gekürzt, werden. Da die Mischvorrichtung eine gewisse Mindestlänge aufweisen muss, ist auch das Schmelzevolumen, das stets in der Mischvorrichtung vorhanden ist, relativ groß. Dies bedingt, dass beispielsweise bei einem Farbwechsel relativ viel Zeit und Material benötigt wird, bis brauchbare Teile in der neuen Farbe erhalten werden. Aufgrund der Tatsache, daß der Mischring durchbrochen ist, hat er des Weiteren den Nachteil, mechanisch geschwächt zu sein. Je kürzer der Ring, um so prominenter ist dieser Nachteil, wodurch er eine hohe Verschleißanfälligkeit hat.

Aufgabe der vorliegenden Erfindung war es, eine Vorrichtung zur Verfügung zu stellen, die sich für Mischzwecke und dem Einsatz in Schneckenmaschinen eignet, wobei sie die Nachteile der bekannten Mischvorrichtungen nicht aufweisen sollte. Insbesondere sollte sie einfach herstellbar sein. Des Weiteren sollte sie so konstruiert sein, dass sie möglichst störungsunempfindlich, belastbar und verschleißarm sein sollte. Darüber hinaus war es ein Ziel, eine Vorrichtung zu finden, die sich einfach in sehr verschiedene Schneckenmaschinen ein und ausbauen lassen sollte, ohne dass die Schneckenmaschinen selbst aufwendig an die Mischvorrichtung angepasst werden muss. Auch sollte die Mischvorrichtung der Anforderung genügen leicht reinigbar zu sein.

Zur Lösung dieser Aufgabe wird eine Mischvorrichtung mit den kennzeichnenden Merkmalen vorgeschlagen:
daß der Vorring und der Endring jeweils mindestens einen Kanal (2k) bzw. (3k) aufweist, der achsparallel (axial), unter einem Winkel zur Achse der Welle oder schraubenförmig verläuft und jeweils mindestens zwei Bereiche unterschiedlichen Außendurchmessers aufweist, wovon der Bereich mit dem kleineren Außendurchmesser sich jeweils auf der dem Mischring zugewandten Seite befindet und
der Mischring einen ersten Bereich hat, in dem sein Innendurchmesser groß genug ist, um mit dem Bereich kleineren Durchmessers des Vorrings überlappen zu können, einen sich daran anschließenden Bereich hat, in dem der Mischring an seiner Innenseite mindestens einen Kanal (4k) aufweist, der achsparallel (axial), unter einem Winkel zur Achse der Welle oder schraubenförmig verläuft, sowie einen sich daran anschließenden dritten Bereich hat, in dem sein Innendurchmesser groß genug ist, um mit dem Bereich kleineren Durchmessers des Endrings überlappen zu können und der Mischring so lang ist, dass in seinen jeweiligen Endstellungen der jeweils andere der beiden Ringe (2) oder (3) teilweise überlappt wird.

Eine solche Mischvorrichtung erlaubt es aufgrund seiner Verschleißarmut und geringen Störungsanfälligkeit eine Schneckenmaschine mit einer hohen Standzeit zu betreiben. Sofern gewünscht, kann eine solche Mischvorrichtung ohne großen Aufwand in verschiedenen Schneckenmaschinen eingebaut werden.

Eine solche Mischvorrichtung erlaubt es beispielsweise auch, einen schnellen Austausch der Schmelze gewährleisten können, um so Ausschuss z.B. bei Farbwechsel möglichst gering halten zu können. Sie erlaubt es ferner, auf den Farbort eines Spritzgußteils Einfluss nehmen zu können. In den abhängigen Unteransprüchen sind bevorzugte Ausführungsformen angegeben.

Die erfindungsgemäße Mischvorrichtung wird im Folgenden näher beschrieben.

### Welle (1)

Die Welle (1) der erfindungsgemäßen Mischvorrichtung kann prinzipiell frei gewählt und an die Erfordernisse, wie zu mischende Materialart oder Materialmenge und gewünschter Durchsatz angepasst werden. So kann sie rund sein oder eine andere Form aufweisen, beispielsweise oval sein. Im Allgemeinen ist sie rund. Ihr Durchmesser ist ebenfalls frei wählbar und wird in der Regel auf die Größe der Schneckenmaschine, in der die erfindungsgemäße Mischvorrichtung eingesetzt werden soll, angepasst. Selbstverständlich, wenn auch nicht bevorzugt, wäre es ebenso denkbar, die Schneckenmaschine an den Durchmesser der Welle der erfindungsgemäßen Mischvorrichtung anzupassen. Die Länge der Welle richtet sich ebenfalls nach den Erfordernissen und ist ansonsten prinzipiell frei wählbar. Die Oberfläche der Welle kann im Bereich der Strecke zwischen dem Vorring (2) und dem Endring (3) glatt sein oder aber auf der Strecke zwischen Vorring und Endring mindestens einen, beispielsweise zwei oder drei oder auch mehr ringsumlaufende Kanäle (1k) aufweisen. Die Zahl der ringsumlaufenden Kanäle (1k) richtet sich zum einen nach der beabsichtigten Mischwirkung, zum anderen nach der Art und Menge des Materials. Bevorzugt ist die Oberfläche der Welle entweder glatt oder weist einen ringsumlaufenden Kanal (1k) auf. Die Querschnittsform des ringsumlaufenden Kanals bzw. der ringsumlaufenden Kanäle ist an sich frei wählbar, wobei strömungsgünstige Formen bevorzugt werden. So kann sie V-förmig, U-förmig, ringartig oder rechteckig sein. Sofern mehr als ein ringsumlaufender Kanal verwendet wird, ist es auch denkbar, dass die ringsumlaufenden Kanäle unterschiedliche Querschnittsform haben. Besonders bevorzugt sind alle ringsumlaufenden Kanäle U-förmig. Sofern mehr als eine ringsumlaufender Kanal verwendet wird, sind sie vorzugsweise gleichmäßig über die Oberfläche der Welle verteilt.

Bevorzugt ist die erfindungsgemäße Mischvorrichtung mit einer oder insbesondere auf beiden Seiten mit zwei weiteren Vorrichtungen verbunden. Hierfür ist die Welle in der Regel so gestaltet, dass sie mindestens an der Seite, an der sich der Vorring befindet, eine Einrichtung umfasst, die es ermöglicht, die erfindungsgemäße Mischvorrichtung mit einer weiteren Vorrichtung zu verbinden. Bevorzugt weist die Welle auch an der Seite, an der sich der Endring befindet, eine Einrichtung auf, mit der die erfindungsgemäße Mischvorrichtung mit einer angrenzenden Vorrichtung verbunden werden kann. Die Verbindung wird bevorzugt mittels eines Gewindes erreicht. Es ist aber möglich die Verbindung durch Schweißen, Schrumpfen, Verkeilen, oder Verzahnen herzustellen. Als Vorrichtungen mit denen die erfindungsgemäße Mischvorrichtung verbunden werden kann, werden beispielhaft Schneckenelemente genannt, wie Schneckenspitze, Knetelement, Förderelement, Scherelement, Entgasungsvorrichtung oder Einzugsbereich. Derartige Vorrichtungen sind dem Fachmann bekannt oder können nach dem Fachmann bekannten Gesichtspunkten hergestellt und an die Erfordernisse angepasst werden.

Besonders bevorzugt ist die Welle auf der Seite an der sich der Vorring befindet mit einer Plastifizierschnecke und auf der Seite an der sich der Endring befindet mit einer Schneckenspitze verbunden.

### Vorring (2) und Endring(3)

Erfindungsgemäß ist mit der Welle ein Vorring (2) und ein Endring (3) form- und kraftschlüssig (fest) verbunden. Die Ringe (2) und (3) können dabei lösbar oder nicht lösbar mit der Welle verbunden sein. Es ist auch denkbar, dass einer der beiden Ringe lösbar, einer nicht lösbar mit der Welle verbunden ist. Vorteilhaft und bevorzugt ist es, dass sowohl der Vorring als auch der Endring lösbar mit der Welle verbunden ist. So können die Ringe verschraubt, verspannt, verkeilt, verzahnt oder aufgepresst sein. Dabei können Vorring und Endring auf die gleiche Art aber auch auf unterschiedliche Weise mit der Welle verbunden sein. Darunter ist es besonders bevorzugt, den Vorring mit der Welle zu verspannen und den Endring nicht lösbar mit der Welle zu verbinden.

Erfindungsgemäß sind der Vorring und der Endring im Abstand A voneinander mit der Welle verbunden. Dabei ist der Abstand A die Strecke vom höchsten Punkt des Vorrings zum höchsten Punkt des Endrings, d. h. die Stelle an der die Schulter 2s bzw. 3s den größten Außendurchmesser von 2 bzw. 3 erreicht. Der Abstand A kann im Prinzip frei gewählt werden, so dass er den Bedürfnissen des Einzelfalls und Anwendungszwecks angepasst ist. Für die meisten Anwendungen ist es zweckmäßig, dass der Abstand A relativ kurz ist, wodurch die sich die erfindungemäße Vorrichtung insbesondere gut als Spitze einer Schnecke eignet oder als Rückstromsperre in einer Spritzformmaschine einsetzen lässt. Beispielsweise kann es sich empfehlen den Abstand A klein zu wählen, wenn sich in der Mischvorrichtung zu jeder Zeit möglichst wenig Material befinden soll. Gemäß einer der bevorzugten Ausführungsformen liegt der Abstand A im Bereich von 10 mm bis 200 mm, besonders bevorzugt im Bereich von 15 mm bis 150 mm, insbesondere im Bereich von 20 mm bis 80 mm.

Erfindungsgemäß weisen sowohl der Vorring (2) als auch der Endring (3) jeweils mindestens einen Kanal (2k) bzw. (3k) auf. Sie können jeweils auch mehr als einen Kanal (2k) bzw. (3k) aufweisen, beispielsweise zwei oder drei oder auch mehr, z.B. bis zu 50. Dabei ist es möglich, dass der Vorring und der Endring die gleiche oder eine unterschiedliche Anzahl von Kanälen (2k) bzw. (3k) aufweisen. Die Kanäle (2k) bzw. (3k) können achsparallel (axial) oder unter einem Winkel zur Achse der Welle oder schraubenförmig, beispielsweise spiralartig verlaufen. Besonders bevorzugt verlaufen sie achsparallel zur Achse der Welle (axial). Die Anzahl, Querschnittsform und Anordnung der Kanäle (2k) bzw. (3k) richten sich nach den Gegebenheiten. So kann beispielsweise eine höhere Anzahl dann vorteilhaft sein, wenn die Mischwirkung hoch sein soll. Besonders bevorzugt weisen der Vorring und der Endring die gleiche Anzahl von Kanälen (2k) und (3k) auf und die Zahl der Kanäle (2k) bzw. (3k) liegt bevorzugt im Bereich von 4 bis 25. Bevorzugt haben die Kanäle eine strömungsgünstige Querschnittsform. Sie können beispielsweise V-förmig, U-förmig, ringartig oder rechteckig sein. Wenn mehr als ein Kanal verwendet wird, ist es auch denkbar, dass die Kanäle unterschiedliche Querschnittsform aufweisen können. Besonders bevorzugt sind alle Kanäle U-förmig. Die Tiefe der Kanäle richtet sich nach konstruktiven Gegebenheiten, wobei vorteilhafterweise die Stabilität der Ringe nicht beeinträchtigt werden sollte.

Der Vorring (2) und der Endring (3) haben jeweils mindestens einen Bereich mit einem größeren Außendurchmesser und einen Bereich mit einem kleineren Außendurchmesser. Die beiden Bereiche des Vorrings bzw. des Endrings können kontinuierlich ineinander übergehen und eine Schulter bilden. Alternativ können sie aber auch stufenweise ineinander übergehen, so dass es zwischen dem Bereich mit dem kleinsten Außendurchmesser und dem Bereich mit dem größten Außendurchmesser Bereiche gibt, die einen in der Größe dazwischenliegenden Außendurchmesser aufweisen. So können ein oder zwei oder mehr Bereich zwischen dem Bereich mit dem kleinsten und dem Bereich mit dem größten Außendurchmesser liegen. Besonders bevorzugt gehen die beiden Bereiche kontinuierlich ineinander über und bilden eine Schulter. Insbesondere weist die Schulter einen Winkel α von 0 bis 45° auf. Die Größe des größten und des kleinsten Außendurchmesser werden in der Regel bestimmt durch den Innendurchmesser der Schnecke (Schneckengrund) und den Innendurchmesser des Mischrings (4). Erfindungsgemäß befindet sich jeweils der Bereich mit dem kleineren Außendurchmesser auf der dem Mischring zugewandten Seite. Die Ausgestaltung von Vorring und Endring auf der vom Mischring weg gewandten Seite ist für die Funktion der erfindungemäßen Mischvorrichtung nur insofern wesentlich, dass sie sie nicht stören darf. Beispielsweise kann sie eine Stufe oder eine Schulter aufweisen. Zweckmäßigerweise ist die jeweilige weggewandte Seite der Ringe (2) und (3) im Allgemeinen so gestaltet, dass die erfindungemäße Mischvorrichtung form- und kraftschlüssig mit einer weiteren Vorrichtung verbunden werden kann. Vorring und Endring können so ausgestaltet sein, dass sie unterschiedliche Form und Größe haben. Sie können aber auch die gleiche Größe aufweisen und an sich die gleiche Form haben und sich nur dadurch unterscheiden, das sie spiegelverkehrt sind.

### Mischring (4)

Erfindungsgemäß umfasst die erfindungemäße Mischvorrichtung einen Mischring (4). Dieser ist lose und frei drehbar und befindet sich zwischen dem Vorring und dem Endring hin- und herbewegbar.

Der Mischring weist einen ersten Bereich auf, in dem sein Innendurchmesser groß genug ist, um mit dem Bereich des Vorrings überlappen zu können.

An den ersten Bereich des Mischrings schließt sich ein zweiter Bereich an, in dem der Mischring an seiner Innenseite mindestens einen Kanal (4k) aufweist, der achsparallel (axial), unter einem Winkel zur Achse der Welle oder schraubenförmig, beispielsweise spiralartig, besonders bevorzugt achsparallel (axial) verläuft. In diesem Bereich kann der Mischring aber auch mehr als einen Kanal (4k) aufweisen. So kann er beispielsweise zwei oder drei oder mehr, z.B. bis zu 50 Kanäle (4k) haben. In der Regel liegt die Anzahl der Kanäle (4k) im Bereich von 4 bis 20. Besonders bevorzugt verläuft mindestens einer der Kanäle (4k) achsparallel (axial). Insbesondere ist es bevorzugt, dass alle Kanäle (4k) achsparallel (axial) verlaufen. Gemäß einer der besonders bevorzugten Ausführungsformen verlaufen mindestens zwei der Kanäle (4k) achsparallel (axial) und sind zueinander versetzt. Ganz besonders bevorzugt verlaufen alle Kanäle (4k) axial und sind zueinander so versetzt, dass Prallräume zwischen ihnen entstehen. Im Allgemeinen haben die Kanäle einen U-förmigen Querschnitt, können aber auch eine andere Querschnittsformorm aufweisen und beispielsweise V-förmig, ringartig oder rechteckig sein. Die Kanäle (4k) können sich in ihrer Tiefe und Breite voneinander unterscheiden.

An den zweiten Bereich des Mischrings schließt sich ein dritter Bereich an. In dem dritten Bereich hat der Mischring einen Innendurchmesser, der groß genug ist, um mit dem Bereich des Endrings überlappen zu können. Je nachdem ob der Bereich des Vorrings und der Bereich des Endrings gleich groß sind bzw. die gleiche Gestalt aufweisen, sind die ersten und dritten Bereiche (d.h. die beiden äußeren Bereiche) des Mischrings ebenfalls gleich groß und von gleicher Gestalt. Andernfalls sind sie unterschiedlich.

Erfindungsgemäß ist der Mischring so lang, dass in seinen jeweiligen Endstellungen der jeweils andere der beiden Ringe (1) oder (2) teilweise überlappt werden. Dies heißt, daß wenn eine seiner Stirnflächen mit einem der beiden Ringe (2) oder (3) formschlüssig abschließt der jeweils andere der beiden Ringe (2) oder (3) teilweise und zwar jeweils in seinem Bereich seines kleineren Durchmessers überlappt wird. In der Regel beträgt die Länge des Mischrings von A minus 3% bis A minus 20%. Bevorzugt liegt die Länge des Mischrings im Bereich von A minus 6% bis A minus 12%. Von der Gesamtlänge des Mischrings nimmt der mittlere zweite Bereich in der Regel von 20 bis 70% ein und die beiden äußeren Bereiche zusammen von 30 bis 80%. Die beiden ersten und zweiten Bereiche können gleich lang sein. Ebenso ist es möglich, dass die beiden ersten und zweiten Bereiche unterschiedlich lang sind. Gemäß einer bevorzugten Ausführungsform sind die beiden ersten und zweiten Bereiche gleich lang.

Die erfindungsgemäße Mischvorrichtung wird bevorzugt in einer Schneckenmaschine, darunter bevorzugt in Einschneckenmaschinen, eingesetzt. Nach einer Ausführungsform schließt der Mischring formschlüssig mit dem Endring ab. Diese Ausführungsform ist dann besonders bevorzugt, wenn die erfindungsgemäße Mischvorrichtung als Mischelement in einem Extruder eingesetzt ist. Nach einer anderen Ausführungsform verschiebt sich der Mischring axial zwischen dem Vorring und dem Endring. Diese Ausführungsform ist dann besonders bevorzugt, wenn die erfindungsgemäße Vorrichtung in der Art einer Rückströmsperre verwandt wird, insbesondere für Spritzformmaschinen.

Die erfindungsgemäße Mischvorrichtung eignet sich dazu, viskoses Material mit Zusatzstoffen zu vermischen. Mittels der erfindungsgemäßen Vorrichtung können viskose Materialien dadurch gemischt werden, dass sie in axialer Richtung in kleine Volumeneinheiten aufgeteilt werden. Bevorzugt umfasst die erfindungsgemäße Mischvorrichtung Prallflächen, die z.B. dadurch entstehen, dass die Kanäle (4k) des Mischrings versetzt zueinander angeordnet sind. Die Mischwirkung der erfindungsgemäßen Mischvorrichtung wird dadurch unterstützt, dass Mischzonen vorhanden sind, die konstante Größe haben und Mischzonen variabler Größe umfasst sein können. Letztere können dadurch entstehen, dass der Mischring sich axial bewegt. Die erfindungsgemäße Vorrichtung ist einfach und kostengünstig herzustellen und aufgrund fehlender toter Zonen leicht zu reinigen.

Insbesondere eignet sich die erfindungsgemäße Mischvorrichtung auch für thermisch empfindliche viskose Materialien. Unter viskosem Material können thermoplastische Kunststoffe verstanden werden, deren Schmelze sich in einer Schneckenmaschine verarbeiten lässt. Es kommen daneben aber auch andere viskose Materialen in Betracht so z.B. solche auf dem Gebiet der Baustoffe, auf dem Gebiet der Naturstoffe, wie Nahrungsmittel oder auf dem Gebiet der Arzneistoffe. Die Art und Menge der Zusatzstoffe richtet sich selbstverständlich nach dem viskosen Material, das verarbeitet werden soll.

Nach einer bevorzugten Ausführungsform wird die erfindungsgemäße Mischvorrichtung zum Vermischen von Schmelzen thermoplastischer Kunststoffe, darunter insbesondere Kunststoffe auf dem Gebiet der Styrolcopolymeren wie Styrolacrylnitrilcopolymeren (SAN) Acrylnitril-Butadien-Styrolcopolymeren (ABS) oder Acrylnitril-Acrylat-Styrolcopolymeren (ASA) mit Zusatzstoffen, insbesondere Farbmittel, eingesetzt. Insbesondere wird die Mischvorrichtung hierzu in Verbindung mit einer Schneckenspitze in der Art einer Rückströmsperre mit Mischwirkung in einer Spritzformmaschine verwendet.

In dem Fall, dass die erfindungsgemäße Mischvorrichtung in der Art einer Rückströmsperre in einer Spritzgießmaschine betrieben wird, liegt der Mischring (4) während des Einspritzvorgangs zunächst formschlüssig nach hinten dichtend an dem Vorring (2) an, so dass das Zurückfließen der Schmelze verhindert wird. Nach dem Beginn des Plastifiziervorgangs bewegt sich der Mischring durch den Druck der von der Schnecke geförderten ankommenden Schmelze, in der das Farbmittel noch unzureichend verteilt vorliegt, hin zum Endring (3). Die Drehzahl des Mischrings liegt so lange bei null, bis der Mischring am Endring formschlüssig anliegt. Da die Anlagefläche, die beispielsweise die Schulter des Endrings sein kann, in der Regel klein ist, ist die Drehzahl des Mischrings im Allgemeinen wesentlich geringer als die Drehzahl mit der die Spritzformmaschine, betrieben wird. Die von der Schnecke geförderte Schmelze wird während des Plastifiziervorgangs vom Vorring in die Anzahl der Kanäle (2k) aufgeteilt. Liegt der Mischring formschlüssig am Vorring (2) an, so werden die Schmelzeströme direkt in Volumenelemente durch Öffnungen (4o₁) des Mischrings aufgeteilt. Die Schmelzeströme treffen dann beispielsweise auf Prallflächen (4p) des Mischrings, die dadurch entstehen, dass die Kanäle (4k) des Mischrings versetzt zueinander angeordnet sind. Die Schmelzeströme werden in den Mischzonen (4m) gemischt, durch die Öffnungen (4o₂) weiter verteilt und gelangen am Ende der Öffnungen (4o₂) in einen weiteren Mischraum (3m). Von dort wird die Schmelze nochmals durch die Kanäle (3k) des Endrings aufgeteilt. Bewegt sich der Mischring hin zum Endring so entsteht ein Mischraum (2m) zwischen Vorring und Mischring. Dieser wird im Verlauf der Bewegung des Mischrings größer. Gleichzeitig wird der Mischraum (3m), der zwischen Endring und Mischring liegt, kleiner und ist nicht mehr vorhanden, wenn der Mischring formschlüssig am Endring (3) anliegt. In diesem Fall wird die Schmelze, die aus der Öffnungen (4o₂) des Mischrings austritt direkt in Volumenelemente durch die Kanäle (3k) des Endrings aufgeteilt.

Als Schneckenspitze kann prinzipiell jede Schneckenspitze eingesetzt werden, die es erlaubt, dass die Schmelze in den Vorraum austreten kann.

Die erfindungsgemäße Mischvorrichtung hat den besonderen Vorteil, dass ihre Mischwirkung im wesentlichen von der Länge der Vorrichtung unabhängig ist. Ihre Mischwirkung kann insbesondere durch die Anzahl und Querschnittsform der Kanäle beeinflusst werden. Im Allgemeinen hat die erfindungsgemäße Mischvorrichtung eine Länge die 1,8 D nicht überschreitet, bevorzugt jedoch nicht länger ist als bis zu 1,5 D, insbesondere bis 1,2 D, wobei D definiert ist als der Durchmesser der Schnecke.

Eine beispielhafte Ausführungsform der erfindungsgemäßen Mischvorrichtung ist in den Zeichnungen schematisch näher erläutert und zeigt:
Figur 1:
   Ansicht einer erfindungsgemäßen Mischvorrichtung in der Art einer Rückströmsperre während des Einspritzvorgangs (d.h. in der Schließstellung) in Verbindung mit einer Schneckenspitze
      - 2: Vorring
      - 2k: Kanal im Vorring zum Verteilen der Schmelze
      - 3: Endring
      - 3k: Kanal im Endring zum Verteilen der Schmelze
      - 3m: Mischraum zwischen Endring und Mischring
      - 3s: Schulter, Übergang vom Bereich 3b₂ zum Bereich 3b₁
      - 4: Mischring
      - 4k: Kanal im Mischring zum Verteilen der Schmelze
      - 4m: Mischraum im Mischring
      - 4p: Prallfläche
      - Teilausschnitt x :: Winkel α
Figur 2:
   Ansicht einer erfindungsgemäße Mischvorrichtung in der Art einer Rückströmsperre während des Plastifiziervorgangs (d. h. in der Förderstellung) in Verbindung mit einer Schneckenspitze
      - 1: Welle
      - 1k: rings um die Welle laufender Kanal
      - 2m: Mischraum zwischen Vorring und Mischring
      - 2s: Schulter, Übergang vom Bereich 2b₂ zum Bereich 2b₁
      - A: Abstand zwischen dem Vorring und dem Endring
Figur 3:
   Aufsicht einer Schneckenspitze, die mit der erfindungsgemäßen Vorrichtung verbunden sein kann
Figur 4:
   Ansicht einzelne Teile einer erfindungsgemäßen Mischvorrichtung oben:
      Ansicht einer Welle mit Schneckenspitze
         - 1: Welle
         - 1k: rings um die Welle laufender Kanal
         - 1h: Halterungsvorrichtung für Vorring
         - 3: Endring (mit Schneckenspitze verbunden)
   unten links:
      Schnitt durch einen Mischring (4)
   unten rechts:
      Schnitt durch einen Vorring
Figur 5;
   Draufsicht auf einen Mischring (Teilansicht), der Kanäle mit unterschiedlicher Querschnittsform aufweist
Figur 6
   Schematische Darstellung der Aufteilung des viskosen Materials beim Durchgang durch eine erfindungsgemäße Mischvorrichtung (Mischring liegt an Vorring an, d. h. Einspritzvorgang)
   - 2: Vorring
   - 2k: Kanal im Vorring
   - 4k: Kanal im Mischring
   - 4m: Mischzone
   - 4₀₁: Öffnung
   - 4₀₂: Öffnung
   - 4p: Prallfläche
   - 3: Endring
   - 3k: Kanal im Endring
   - 3m: Mischraum

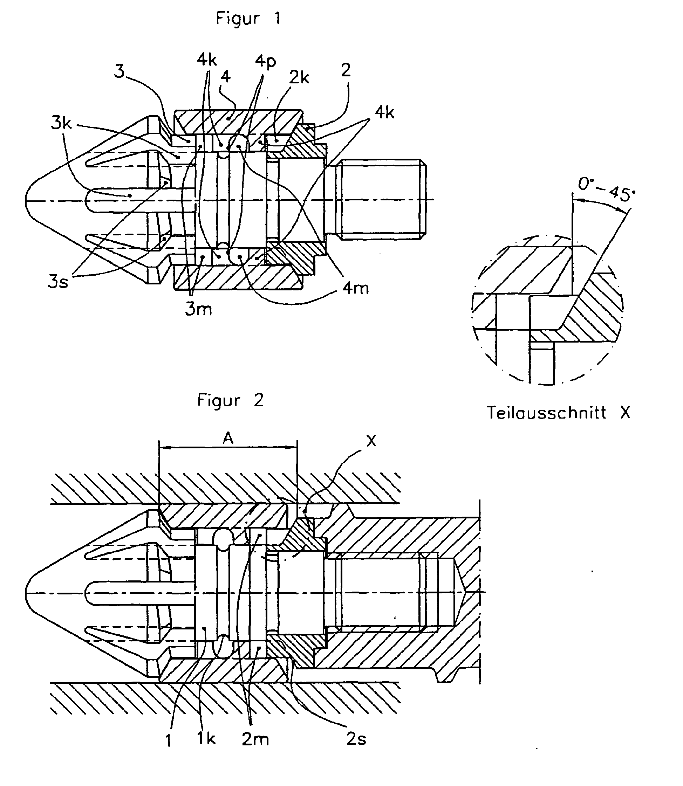

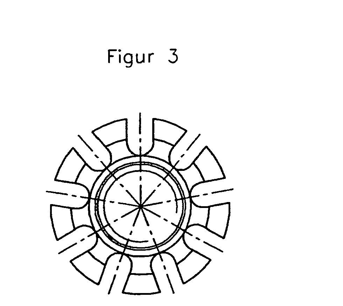

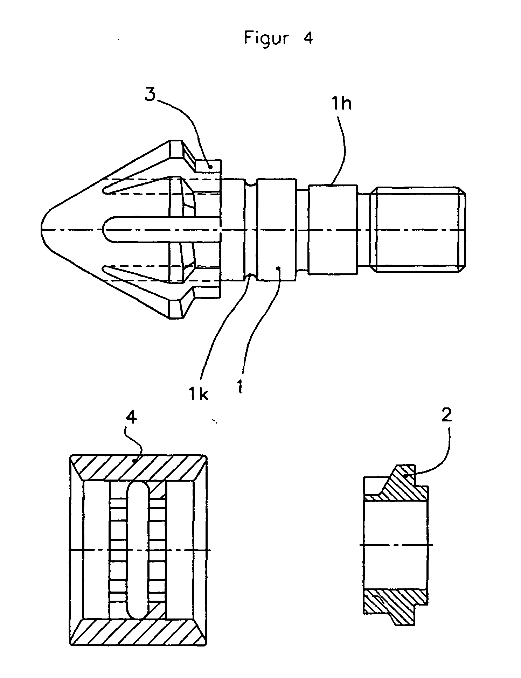

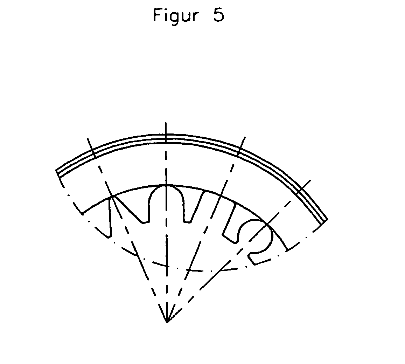

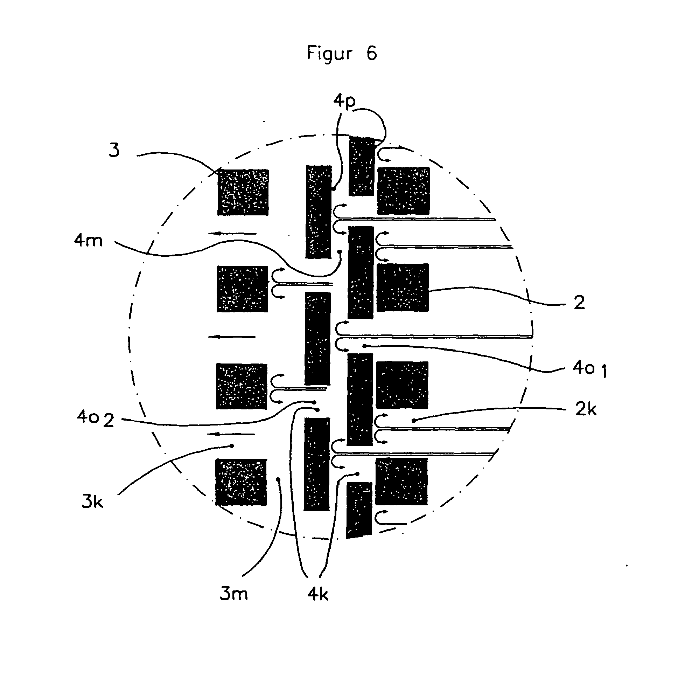

## Patentansprüche

1. Mischvorrichtung umfassend eine Welle (1), einen mit dieser Welle form- und kraftschlüssig verbundenen Vorring (2), einen, in einem Abstand A von dem Vorring, form- und kraftschlüsig mit der Welle verbundenen Endring (3) sowie einen losen, frei drehbaren und zwischen dem Vorring und dem Endring hin- und herbewegbaren Mischring (4), **dadurch gekennzeichnet, dass**
der Vorring und der Endring jeweils mindestens einen Kanal (2k) bzw. (3k) aufweist, der achsparallel, unter einem Winkel zur Achse der Welle oder schraubenförmig verläuft und jeweils mindestens zwei Bereiche unterschiedlichen Außendurchmessers aufweist, wovon der Bereich mit dem kleineren Außendurchmesser sich jeweils auf der dem Mischring zugewandten Seite befindet und
der Mischring einen ersten Bereich hat, in dem sein Innendurchmesser groß genug ist, um mit dem Bereich kleineren Durchmessers des Vorrings überlappen zu können, einen sich daran anschließenden zweiten Bereich hat, in dem der Mischring an seiner Innenseite mindestens einen Kanal (4k) aufweist, der achsparallel unter einem Winkel zur Achse der Welle oder schraubenförmig verläuft sowie einen sich daran anschließenden dritten Bereich hat, in dem sein Innendurchmesser groß genug ist, um mit dem Bereich kleineren Durchmessers des Endrings überlappen zu können und der Mischring so lang ist, dass, in seinen jeweiligen Endstellungen der jeweils andere der beiden Ringe (2) oder (3) teilweise überlappt wird.

2. Vorrichtung nach Anspruch 1, **dadurch gekennzeichnet, dass** der Mischring an seiner Innenseite mindestens einen Kanal (4k) aufweist, der achsparallel verläuft.

3. Vorrichtung nach mindestens einem der Ansprüche 1 bis 2, **dadurch gekennzeichnet, dass** der Mischring an seiner Innenseite mindestens zwei Kanäle (4k) aufweist, die achsparallel verlaufen und versetzt zueinander angeordnet sind.

4. Vorrichtung nach mindestens einem der Ansprüche 1 bis 3, **dadurch gekennzeichnet, dass** die Welle auf der Strecke zwischen Vorring und Endring eine glatte Oberfläche hat.

5. Vorrichtung nach mindestens einem der Ansprüche 1 bis 4, **dadurch gekennzeichnet, dass** die Welle auf der Strecke zwischen Vorring und Endring mindestens einen ringsumlaufenden Kanal (1k) aufweist.

6. Vorrichtung nach mindestens einem der Ansprüche 1 bis 5, **dadurch gekennzeichnet, dass** die Vorrichtung auf beiden Seiten mit einer angrenzenden Vorrichtung verbunden werden kann.

7. Verwendung der Vorrichtung gemäß mindestens einem der Ansprüche 1 bis 6 als Mischelement in einer Schneckenmaschine.

8. Verwendung der Vorrichtung nach Anspruch 7 in Verbindung mit einer Schneckenspitze.

## Claims

1. A mixing device comprising a shaft (1), a front ring (2), which is positively and non-positively connected to this shaft, an end ring (3), which is positively and non-positively connected to the shaft at a distance A from the front ring, and a loose mixing ring (4), which is freely rotatable and can be moved back and forth between the front ring and the end ring, wherein
the front ring and the end ring in each case have at least one channel (2k) or (3k), respectively, which runs axially parallel, at an angle in relation to the axis of the shaft or helically, and has in each case at least two regions of different outside diameters, of which the region with the smaller outside diameter is respectively located on the side facing the mixing ring, and
the mixing ring has a first region in which its inside diameter is large enough for it to be able to overlap with the region of smaller diameter of the front ring, has an adjoining second region in which the mixing ring has on its inner side at least one channel (4k) which runs axially parallel, at an angle in relation to the axis of the shaft or helically, and also an adjoining third region, in which its inside diameter is large enough for it to be able to overlap with the region of smaller diameter of the end ring and the mixing ring is so long that, in its respective end positions, the other of the two rings (2) or (3) respectively is partially overlapped.

2. The device according to claim 1, wherein the mixing ring has on its inner side at least one channel (4k) which runs axially parallel.

3. The device according to at least one of claims 1 and 2, wherein the mixing ring has on its inner side at least two channels (4k) which run axially parallel and are arranged offset in relation to each other.

4. The device according to at least one of claims 1 to 3, wherein the shaft has a smooth surface on the section between the front ring and the end ring.

5. The device according to at least one of claims 1 to 4, wherein the shaft has at least one circumferential channel (1k) on the section between the front ring and the end ring.

6. The device according to at least one of claims 1 to 5, wherein the device can be connected on both sides to at an adjacent device.

7. The use of the device according to at least one of claims 1 to 6 as a mixing element in a screw machine.

8. The use of the device according to claim 7 in connection with a screw tip.

## Revendications

1. Dispositif mélangeur comprenant un arbre (1), une bague antérieure (2) reliée à cet arbre par une liaison due à la forme et à une force, une bague terminale (3) reliée à l'arbre à une distance A de la bague antérieure, par une liaison due à la forme et à une force, ainsi qu'une bague mélangeuse (4) lâche, capable de tourner librement et d'effectuer un mouvement de va-et-vient entre la bague antérieure et la bague terminale,
**caractérisé en ce que** la bague antérieure et la bague terminale présentent chacune au moins un canal (2k) et respectivement (3k), qui s'étend axialement parallèlement, sous un angle par rapport à l'axe de l'arbre ou sous une forme hélicoïdale, et présentent chacune au moins deux zones de diamètre externe différent, dont la zone ayant le diamètre externe le plus petit se situe chaque fois du côté tourné vers la bague mélangeuse, et
la bague mélangeuse comporte une première zone dans laquelle son diamètre interne est suffisamment grand pour pouvoir être en chevauchement avec la zone de diamètre le plus petit de la bague antérieure, une deuxième zone qui s'y rattache et dans laquelle la bague mélangeuse présente à son côté intérieur au moins un canal (4k) qui s'étend axialement parallèlement, sous un angle par rapport à l'axe de l'arbre ou sous forme hélicoïdale, ainsi qu'une troisième zone qui s'y rattache et dans laquelle son diamètre interne est suffisamment grand pour pouvoir être en chevauchement avec la zone du diamètre le plus petit de la bague terminale, la bague mélangeuse étant suffisamment longue pour que, dans ses positions respectivement terminales, respectivement l'autre des deux bagues (2) ou (3) soit partiellement recouverte.

2. Dispositif suivant la revendication 1, **caractérisé en ce que** la bague mélangeuse présente à son côté intérieur au moins un canal (4k) qui s'étend parallèlement axialement.

3. Dispositif suivant au moins l'une des revendications 1 et 2, **caractérisé en ce que** la bague mélangeuse présente à son côté intérieur au moins deux canaux (4k) qui s'étendent axialement parallèlement et sont agencés de manière décalée l'un par rapport à l'autre.

4. Dispositif suivant au moins l'une des revendications 1 à 3, **caractérisé en ce que** l'arbre présente sur l'intervalle entre la bague antérieure et la bague terminale une surface lisse.

5. Dispositif suivant au moins l'une des revendications 1 à 4, **caractérisé en ce que** l'arbre présente sur l'intervalle entre la bague antérieure et la bague terminale au moins un canal périphérique (1k).

6. Dispositif suivant au moins l'une des revendications 1 à 5, **caractérisé en ce que** le dispositif peut être relié des deux côtés à un dispositif adjacent.

7. Utilisation du dispositif suivant au moins l'une des revendications 1 à 6, comme élément mélangeur dans une machine à vis.

8. Utilisation du dispositif suivant la revendication 7, en combinaison avec une pointe de vis.
